# EUROPEAN PATENT APPLICATION

(11) **EP 4 726 957 A1**
(43) Date of publication of application: **15.04.2026**
(21) Application number: 25207858.9
(22) Date of filing: 10.10.2025
(51) Int. Cl.: H02J 7/00, E06B 9/68, H02J 7/35, H02S 40/38, E06B 9/24

(54) **DRIVE MECHANISM AND METHOD TO CONTROL THE DRIVE MECHANISM**

(30) Priority: 10.10.2024 BE 202405675
(71) Applicant: Güler, Muzaffer, 3070 Kortenberg (BE)
(72) Inventor: Güler, Muzaffer, 3070 Kortenberg (BE)
(74) Representative: De Clercq & Partners

(57) **Abstract**

Provided herein is a motor device (10) for building closure means and/or solar shading means. The motor device (10) comprising one or more solar panels (14), a motor device (12), at least two battery packs (18a, 18b), and a PCB controller (16).

The first battery pack (18a) is configured to be installed between the one or more solar panels (14) and the motor device (12), the second battery pack (18b) is configured to be installed between the one or more solar panels (14) and the PCB controller (16), and the PCB controller (16) is able to control the at least the first (18a) and second (18b) battery packs and/or the motor device (12).

Further, a method for controlling the motor device (10) is provided herein, wherein the method comprises the steps of checking the level of stored energy in one or all the battery packs (18a, 18b) and allowing energy generated by the solar panels (14) to be stored in one, some or all the battery packs (18a, 18b).

## Description

### FIELD OF THE INVENTION

The present invention relates to a drive mechanism which is able to control the movement of building closure means or solar shading means such as roll down screens. The invention relates in particular to a drive mechanism which is powered by energy stored in a battery pack.

The present invention further relates to a method to control the drive mechanism.

### BACKGROUND OF THE INVENTION

Building closure means or roll down screens, awnings, roller shutters, roller blinds, and the like are used for various purposes such as for obscuring or blocking light, and for closing or protecting windows and doors. The devices typically comprise a flexible screen or hinged lamellae which can be wound on and unwound from a winding shaft provided in a screen housing. A motor device is typically used to power the movement of the roll down screens.

Although it is possible to operatively power the motor device via a direct electrical cable connection to the electricity supply, such solutions are not always available, e.g. when such a roll down screen is installed after the house is build and no such direct electrical cable connection is available.

Solutions exist which provide for a solar panel to be installed on e.g. the casing of the roll down screens which will power the motor device when the roll down screen needs to be lowered or raised. However, when no direct sun light is available, the solar panel will not be able to generate sufficient electricity to operate the roll down screen. A battery or battery pack is known to be installed for these purposes. That way, the solar panel will be able to generate electricity which can be stored by the battery or battery pack such that sufficient electricity is available to power the motor device when movement of the roll down screen is required.

However, the known batteries or battery packs used will only be able to store a limited amount of electrical energy and when the solar panel keeps generating electricity, the risk occurs that the temperature of the battery or battery packs increases to a point of overheating. When the battery or battery pack starts to overheat, components of the motor device in close vicinity with the hot battery can become damaged by the increase in temperature of the battery. When the increase in temperature continues, it may pose a fire risk, potentially leading to ignition or combustion under certain conditions.

Furthermore, in conventional systems that use a single power source for both the motor and the control logic, the frequent operation of the high-power motor can rapidly deplete the battery. This creates a critical failure mode where the control unit (the 'brain' of the system) loses power, rendering the entire drive mechanism unresponsive. In such a state, the system cannot be operated, nor can it manage the charging process, even if sunlight is available. This lack of operational reliability is a significant drawback in the prior art.

Another deficiency in known systems is their reliance on open-loop control, where the controller sends a command to the motor without receiving any confirmation of the motor's actual status. This can lead to imprecise positioning, an inability to detect if the screen is obstructed or has reached its end-stop, and potential motor damage from stalling. The user is often left uncertain of the screen's true state.

Accordingly, there is a need for drive mechanisms which are able to power roll down screen systems under any circumstance which mitigate at least one of the above problems.

The present invention aims to remedy the drawbacks of the prior art devices by providing a PCB controller which will monitor the status of the battery or battery packs present in the drive mechanism and will control the charging of the battery or battery packs according to the needs of the drive mechanism.

### SUMMARY OF THE INVENTION

To this end, the invention relates to a drive mechanism for building closure means and/or solar shading means, comprising one or more solar panels, a motor device, at least two battery packs, and a PCB controller. The first battery pack is configured to be installed between the one or more solar panels and the motor device, the second battery pack is configured to be installed between the one or more solar panels and the PCB controller, and the PCB controller is able to control and/or monitor the at least first and second battery packs and/or the motor device.

In a preferred embodiment, the first battery pack is configured to provide power to the motor device. In a further preferred embodiment, the second battery pack is configured to provide power to the PCB controller.

Advantageously, by having two or more battery packs, the PCB controller will be able to receive power from a first battery pack, while the motor device will be able to receive power from a second battery pack. Hence, it is possible to foresee at all times sufficient available power for the PCB controller, regardless of the available power available for the motor device. Further, when roll down screens are frequently operated, the motor device will require a significantly higher amount of power than the power required by the PCB controller to remain operational. Hence, the battery or battery pack will be drained from energy more often when providing power to the motor device then due to the power needed by the PCB controller to keep the PCB controller operational.

The global life span of a battery or battery pack decreases when the battery is charged and discharged more often. By providing a separate battery or battery pack for the motor device and the PCB controller, the battery or battery pack of the PCB controller will be independent from the battery or battery pack of the motor device and the life span of the dedicated battery or battery pack for the PCB controller will thus not be influenced by the times the dedicated battery or battery pack for the motor device is charged and discharged. The invention ensures the operational integrity of the PCB controller at all times. The power supply for the controller is electrically isolated from the high-power demands of the motor. This architecture guarantees that the 'brain' of the system remains powered and functional, able to receive user commands and manage charging, even if the main battery for the motor is fully drained. This prevents the critical system failure common in single-source systems and dramatically improves the overall reliability and resilience of the drive mechanism."

In a preferred embodiment, the drive mechanism further comprises a first switch, the first switch is configured to be installed between the one or more solar panels and the second battery pack to selectively provide power to the second battery pack. The PCB controller is typically configured to control the first switch. The PCB controller is able to determine if the battery or battery pack which provides power to the PCB controller is still sufficiently charged. When the level of power in this battery or battery pack drops below a specific minimum level or even when it is completely drained, the PCB controller will control the first switch such that a connection is established via a battery connection wire between the solar panel and the second battery or battery pack. Electricity generated by the solar panel will now be able to flow to the second battery or battery pack to recharge the second battery or battery pack. When the PCB controller determines that the second battery or battery pack is again sufficiently charged, it will again control the first switch such that the battery connection wire to the second battery or battery pack is interrupted and generated electricity is no longer stored in the second battery or battery pack. That way, the second battery or battery pack is isolated from the solar panel and the first battery or battery pack to prevent unnecessary pushing of electricity to the second battery or battery pack.

Preferably, the PCB controller is able to receive information from the one or more battery packs. As an example, the PCB controller is able to read the charging level of the battery, determine the temperature of the battery, determine if a battery is malfunctioning, or determine if a battery is active and functioning properly. Preferably, the PCB controller is able to convert the battery voltage and charging current from an analogue to a digital signal, such that the voltage and charging current information of the one or more battery pack can be determined through an internal comparator of the PCB controller.

In a preferred embodiment, the drive mechanism further comprises a control device to provide instructions to the PCB controller, the control device preferably being a remote control device. A user will be able to provide steering instructions to the PCB controller via the control device such that the roll down screen can be raised or lowered. Although a remote control device is preferred, a control device installed to e.g. the casing of the roll down screen or even an optical sensor such as a light sensor or photodetector can be used to automatically provide an input signal to the PCB controller.

In a preferred embodiment, the drive mechanism comprising one or more couplers, the one or more couplers are configured to interconnect a first element of the drive mechanism, a second element of the drive mechanism and/or the PCB controller. Preferably, the first element comprises the motor device, and the second element comprises a motor installation head. When using couplers to connect the different elements of the drive mechanism together, one is able to select the appropriate component for a specific setup. E.g. when a larger roll down screen needs to be raised or lowered, more power will be needed to move such a larger screen compared to a smaller screen. Also, if typically the roll down screen will be raised or lowered more often during the day, more power will be needed than compared to a roll down screen which is only operated once a day or even only once a week. Hence, in such a case, a larger battery or battery pack can be preferred which will be able to store an sufficient large amount of power to accommodate for the specific need. Likewise, depending on the situation, a different type of solar panel may be preferred. If the solar panel needs to provide power to a smaller roll down screen, the dimensions of the solar panel may be smaller compared to when a larger roll down screen needs to be foreseen with power. Also, if the roll down screen - and hence the solar panel - is positioned in a location with only a limited time in direct sunlight, it may be necessary to foresee a larger solar panel or even multiple solar panels to be able to provide sufficient power to move the roll down screen.

Using couplers to interconnect the different elements will thus allow a greater flexibility since the solar panels, the battery packs and even the PCB control board can be selected depending on the needs for a specific installation. Further, if one of the components malfunctions, it is possible to remove the damaged component and replace it with a new component, while the remaining components can remain in the system. That way, a more cost-efficient system is created which is at the same time a highly flexible system adaptable to a specific situation.

In preferred embodiments, the battery pack comprises a plurality of individual battery cells electrically coupled in parallel, allowing for an increase in total capacity while maintaining a consistent voltage. Depending on the specific situation, a battery pack may be selected which has only one battery cell, or where multiple battery cells are electrically coupled in parallel. When a roll down screen needs more power to be raised or lowered, it may be beneficial to have a battery pack which is able to store more power. That way, it is possible to dimension the battery pack according to the specific needs of the setup. Furthermore, it is possible to provide for multiple battery packs coupled in parallel to again increase the amount of power which is generated by the solar panels to be stored in the multiple battery packs.

Accordingly, in a preferred embodiment the first battery pack (18a) comprises multiple battery cells electrically coupled in parallel. In a further preferred embodiment each of the battery cells of the first battery pack (18a) comprises a switch (22a) positioned between the one or more solar panels and one of the battery cells of the first battery pack (18a) configured to allow or prevent power to flow from the one or more solar panels to the individual battery cells, and wherein the method further comprises the step of controlling the opening and/or closing of the first switch to allow or prevent the flowing of power from the one or more solar panels to the battery cells.

In a preferred embodiment, the drive mechanism further comprises a cable, wherein the cable is configured to directly or indirectly connect the one or more solar panel and the at least two battery packs to provide power from the one or more solar panels to the at least two battery packs or wherein the cable is configured to be connected between a third battery pack and the drive mechanism to provide power to the drive mechanism, the third battery pack preferably being an external battery pack. Preferably, the cable is connected at its first end to at least one solar panel and at its second end to the drive mechanism. In particular, the cable at its second end is connected through a motor head to the PCB controller, motor and one or more battery packs. When a cable is used and unexpectedly the battery packs are drained and the solar panel is unable to generate electrical energy, the cable can be disconnected from the solar panel, and a third battery pack can be attached to the drive mechanism to provide power to the drive mechanism in order for the roll down screen to be raised or lowered. In a further preferred embodiment, the drive mechanism may comprise a connection port to connect a similar cable to the drive mechanism. When a third battery pack is then connected via the cable, power can be provided to the drive mechanism directly without the need for the solar panel to function of for the first or second battery pack to be charged.

In a preferred embodiment, the PCB controller comprises a charger management system configured to receive charging information from the at least two battery packs and/or to send charging instructions to the at least two battery packs, a motor driver system configured to send a steering signal to the motor device and/or to receive a feedback signal from the motor device, and a central controlling system configured to send a controlling signal to the motor device and/or the charger management system, and/or to receive a feedback signal from the motor device and/or the charger management system.

The ability for the motor driver system and central controlling system to receive a feedback signal from the motor device is a significant advantage of the present invention, as it establishes a robust closed-loop control system. This is in stark contrast to conventional open-loop systems of the prior art where the controller sends a command without receiving any confirmation of the motor's action or status. This feedback signal comprises crucial information such as the current rotational position of the motor, confirmation that the screen has reached its upper or lower end-stops, or an error status indicating an obstruction or excessive torque. By processing this feedback, the central controller can achieve far greater control precision, ensure the motor is stopped immediately upon reaching its limits to prevent strain or damage, and intelligently respond to error conditions. In a preferred embodiment, the motor device is a two-way communication motor, for example one operating with a radio transceiver in the 868 MHz band, capable of both receiving commands and transmitting its status back to the PCB controller. This results in a more reliable, robust, and efficient operation of the drive mechanism.

Further provided herein is a motorized building closure and/or solar shading device comprising a screen and a drive mechanism according to the present invention, wherein the drive mechanism is configured to move the screen.

Further provide herein is a method for controlling the drive mechanism according to the present invention, wherein the method comprises the steps of:
- checking the level of stored energy in at least one of the battery packs, and
- allowing energy generated by the one or more solar panels to be stored in at least one of the battery packs.

In a preferred embodiment, the drive mechanism comprises a first switch positioned between the one or more solar panels and one of the battery packs configured to allow or prevent power to flow from the one or more solar panels to the battery pack, and wherein the method further comprises the step of controlling the opening and/or closing of the first switch to allow or prevent the flowing of power from the one or more solar panels to the battery pack.

In a further preferred embodiment, the drive mechanism further comprises a second switch positioned between one of the battery packs and the motor device, wherein the method further comprises the step of controlling the opening and/or closing of the second switch to allow or prevent the flowing of power from the battery pack to the motor device.

The above and other characteristics, features and advantages of the present invention will become apparent from the following detailed description, which illustrates, by way of example, the principles of the invention.

### BRIEF DESCRIPTION OF THE DRAWINGS

The following description of the figures of specific embodiments of the invention is merely exemplary in nature and is not intended to limit the present teachings, their application or uses. Throughout the drawings, corresponding reference numerals indicate like or corresponding parts and features.
**Figure 1** shows a schematic illustration of an exemplary configuration of a motorized solar shading device such as a roll down screen. The motorized solar shading device being positioned above a window, while the roll down screen is able to be raised and lowered in front of the window.
**Figure 2** shows a schematic illustration of the different elements of the drive mechanism according to an embodiment of the present invention.
**Figure 3** shows a schematic illustration of the different elements of the PCB controller according to an embodiment of the present invention.
**Figure 4** shows a schematic representation of an exemplary configuration of the drive mechanism according to an embodiment of the present invention, wherein the different elements of the drive mechanism are coupled to each other by a coupler.
**Figure 5** shows a diagram representing the different steps of the method to control the drive mechanism according to the present invention.

### DETAILED DESCRIPTION

The present invention will be described with respect to particular embodiments but the invention is not limited thereto but only by the claims. Any reference signs in the claims shall not be construed as limiting the scope thereof.

As used herein, the singular forms "a", "an", and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or method steps. The terms also encompass "consisting of" and "consisting essentially of", which enjoy well-established meanings in patent terminology.

The recitation of numerical ranges by endpoints includes all numbers and fractions subsumed within the respective ranges, as well as the recited endpoints. This applies to numerical ranges irrespective of whether they are introduced by the expression "from... to..." or the expression "between... and..." or another expression.

The terms "about" or "approximately" as used herein when referring to a measurable value such as a parameter, an amount, a temporal duration, and the like, are meant to encompass variations of and from the specified value, such as variations of +/-10% or less, preferably +/-5% or less, more preferably +/-1% or less, and still more preferably +/-0.1% or less of and from the specified value, insofar such variations are appropriate to perform in the disclosed invention. It is to be understood that the value to which the modifier "about" or "approximately" refers is itself also specifically, and preferably, disclosed.

Whereas the terms "one or more" or "at least one", such as one or more members or at least one member of a group of members, is clear per se, by means of further exemplification, the term encompasses inter alia a reference to any one of said members, or to any two or more of said members, such as, e.g. any ≥3, ≥4, ≥5, ≥6 or ≥7 etc. of said members, and up to all said members. In another example, "one or more" or "at least one" may refer to 1, 2, 3, 4, 5, 6, 7 or more.

The discussion of the background to the invention herein is included to explain the context of the invention. This is not to be taken as an admission that any of the material referred to was published, known, or part of the common general knowledge in any country as of the priority date of any of the claims.

Throughout this disclosure, various publications, patents and published patent specifications are referenced by an identifying citation. All documents cited in the present specification are hereby incorporated by reference in their entirety. In particular, the teachings or sections of such documents herein specifically referred to are incorporated by reference.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the invention. When specific terms are defined in connection with a particular aspect of the invention or a particular embodiment of the invention, such connotation or meaning is meant to apply throughout this specification, i.e. also in the context of other aspects or embodiments of the invention, unless otherwise defined. For example, embodiments directed to products are also applicable to corresponding features of methods and uses.

In the following passages, different aspects or embodiments of the invention are defined in more detail. Each aspect or embodiment so defined may be combined with any other aspect(s) or embodiment(s) unless clearly indicated to the contrary. In particular, any feature indicated as being preferred or advantageous may be combined with any other feature or features indicated as being preferred or advantageous.

Reference throughout this specification to "one embodiment", "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the appended claims, alternative combinations of claimed embodiments are encompassed, as would be understood by those in the art.

The invention provides in a drive mechanism for building closure means and/or solar shading means, comprising one or more solar panels, a motor device, at least two battery packs, and a PCB controller. The first battery pack is configured to be installed between the one or more solar panels and the motor device, the second battery pack is configured to be installed between the one or more solar panels and the PCB controller, and the PCB controller is able to control and/or monitor the at least first and second battery packs and/or the motor device.

The terms "building closure means" and "solar shading means" as used herein is well known to a skilled person and relates to a variety of roll down screens, awnings, roller shutters, roller blinds, garage doors and the like. These devices are typically able to close an aperture such as a door so that access through the aperture is prevented or block a window from sunlight to enter through the window.

"Solar panel" as used herein refers to a single solar panel element having multiple solar cells which convert sunlight into electricity. Multiple solar panel elements can be coupled together to form a single solar panel. Solar panels can be connected together to increase the surface available to convert sunlight to electricity.

"Motor device" as used herein refers to the motor capable to convert electrical energy into rotational mechanical energy, a gearbox capable to modify the motor's output by changing the speed and torque required for the specific roll down screen used in the setup, and a motor installation head securing the motor and gearbox assembly to the roll down screen of the setup. Typically, the motor will receive electrical power from the battery pack or from the solar panels directly and will generate a rotational motion. The motor's output shaft, connected to the gearbox, will adjust the torque and speed according to the requirements of the specific roll down screen used in the setup. The modified output from the gearbox is then directed to the driven components of the roll down screen through the motor installation head, thus enabling the desired mechanical upward or downward movement of the roll down screen. The motor installation head typically provides stability and proper alignment, ensuring the system to operate efficiently and reliably.

The term "battery pack" as used herein is well known to a skilled person and relates to a collection of one or more batteries that are interconnected to provide a specific voltage and capacity for a particular application. Typically, a battery pack comprises of individual battery cells which can be of various chemistries such as, but not limited to, lithium-ion or nickel-metal hydride. The cells are typically arranged in series to increase the voltage or in parallel to increase the capacity of the battery pack. Depending on the specific embodiment, one arrangement is preferred over the other.

Often, battery packs include a Battery Management System (BMS) to monitor the health of the cells, to manage charging and discharging, and/or ensure the safety of the battery pack. In the present invention, the BMS is in direct contact with the PCB controller to allow for a correct functioning of the drive mechanism.

The battery pack is preferably housed in a protective casing to shield it from physical damage and environmental factors. The battery packs as used in the present invention and in the described embodiments can be designed to fit specific needs, allowing for scalability and customization.

In particular embodiments, a first battery pack is configured to provide power to the motor device, while in other particular embodiments, a second battery pack is configured to provide power to a PCB controller.

"PCB controller" as used herein refers to a control system or circuit that is implemented on a Printed Circuit Board (PCB) to manage the operation of the drive mechanism. Essentially, it is the centre of the drive mechanism, coordinating the functions of various components. Typically, a PCB controller comprises a microcontroller unit or processor for executing instructions and controlling the drive mechanism. One or more Power Supply Components will regulate and distribute power to the various components on the PCB. Input/output (I/O) Interfaces connect external components to the PCB, while the available memory will store firmware that dictates the controller's functions. Preferably, a communication module is provided in the PCB controller to allow external connectivity e.g. via Bluetooth, Wi-Fi or Ethernet with a remote controller device. Additionally, the controller can be connected to a variety of sensors such as temperature sensors or motion sensors or being connected to e.g. actuators to operate a switch.

The PCB controller will receive input signals from sensors or from a user interface and will, based on its programmed firmware, process these inputs and decides on the appropriate action. Once the appropriate action is determine, one or more signals are send to the respective components to perform the determined action.

In particular embodiments, the drive mechanism comprises a first switch which is configured to be installed between the one or more solar panels and a battery pack to selectively provide power to the selectively provide electricity to this battery pack. In further particular embodiments, the drive mechanism comprises a second switch which is configured to be installed between a battery pack and a motor device to selectively provide power to the motor device. The term "power" is a general term which refers to the rate at which electrical energy is supplied. A solar panel is able to generate electricity, which a battery pack is able to store. The use of the terms "power" and "electricity" are well known by the person skilled in the art.

"Switch" as used herein refers to an electrical switch and is a device used to control the flow of electricity in a circuit. It works by opening (interrupting) or closing (completing) the circuit, allowing or stopping the current from flowing to various components or devices. In the present invention, such a switch allows e.g. for a safe disconnecting of the battery pack powering the PCB controller from the solar panels.

Further, such a switch of the present invention also allows for the control of the on/off state to allow or prevent the battery pack intended for powering the PCB controller to also assist the battery pack intended for powering the motor device, when more power is requested by the motor device than available in the battery pack intended for powering the motor device.

In particular embodiments, the drive mechanism comprises couplers which are configured to interconnect particular elements of the drive mechanism with each other. "Coupler" as used herein refers to a connector or interface that links two parts of the drive mechanism, thus allowing signals or power to pass between them. The design and appearance of the coupler depend on its specific type and application. Once connected, the coupler allows electrical signals and/or power to pass through from one component to another, thus creating a secure and reliable connection between the different components of the drive mechanism.

"Cable" as used herein refers to a cable which is used between a solar panel and a battery pack. The cable is typically a DC (Direct Current) power cable, preferably a durable, insulated cable, designed to handle outdoor conditions and efficiently transfer electricity generated by the solar panel to the battery pack. Preferably, the cable between the solar panel and battery pack is provided with MC4 Connectors which are standardized connectors for photovoltaic (PV) systems and allow for an easy and secure connection while being waterproof to withstand outdoor conditions.

"Charger Management System" or "CMS" as used herein refers to a circuit or embedded system that manages and controls the process of charging a battery safely and efficiently. It ensures that the battery is charged in a controlled manner to prevent overcharging, overheating, or damage to the battery, extending its life and ensuring safety. Typically, the CMS will control the charging current and voltage delivered to the battery pack and preferably implements a multi-stage charging process, such as constant current (CC) and constant voltage (CV) modes to optimize battery charging. The CMS typically monitors key battery parameters like temperature, voltage and current and ensures that the battery pack stays within safe operating limits protecting against conditions like over-voltage, over-current and over-temperature. Further, the CMS of the present invention is designed to prevent overcharging and over-discharging, meaning that the CMS will cut off the charging process when the battery reaches its maximum charge level to prevent overcharging, which could potentially cause overheating, battery degradation or even safety hazards like fires. When the battery pack comprises multiple battery cells, the CMS of the present invention will balance the charge across the different battery cells to ensure each one charges evenly to increase their performance and longevity. Further, the CMS of the present invention will ensure an efficient power flow from the solar panels to the battery pack. Preferably, the CMS of the present invention is able to provide for a fast charging of the battery pack and is thus able to control such fast charging modes to provide a quicker charging of the battery pack when needed, while ensuring the battery pack does not overheat or degrade.

Finally, the CMS of the present invention provides for an overcurrent protection, an overvoltage protection, temperature sensing and/or the short circuit protection. Typical components, although not limited thereto, of the CMS in a PCB controller are a charging Integrated Circuit, Power MOSFETs, current sensors, voltage regulators, thermistors or temperature sensors, and a microcontroller.

"Motor driver system" as used herein, is a circuit or module that controls and powers a motor by acting as an interface between the microcontroller (or other control logic) and the motor. Typically, microcontrollers or processors are not capable of directly driving motors due to their low current and voltage outputs. The motor driver system of the present invention is able to amplify control signals to levels that can drive the motor efficiently and safely. The motor driver system as used in the PCB controller of the present invention is thus able to amplify control signals into high-power signals, manage the power flow to regulate the current and voltage delivered to the motor based on the control signals to ensure that the motor receives the right amount of power to operate as intended, control the direction in which the motor spins (forward or reverse) thus changing the rotation direction and effectively accomplishing an upward or downward movement of the roll down screen, and adjusts and controls the speed of the motor and thus the moving speed of the roll down screen by varying the amount of power delivered.

Typically, the microcontroller of the CMS will send low-power control signals to the motor driver system. The motor driver system receives these signals and amplifies them to the necessary power level for the motor used in the specific setup. Based on the control inputs, the motor driver system will provide power to the motor to operate at the desired speed and direction. Preferably, the motor driver system will monitor the current, voltage and temperature in the PCM controller to protect the PCM controller.

"Central controller" or "central controlling system" as used herein refers to a microcontroller or microprocessor capable to process input signals, execute control logic and manage interactions between components such as sensors, actuators and communication interfaces. The central controlling system as used in the PCB controller of the present invention will ensure that the PCB controller is able to perform its intended functions efficiently by integrating power management, timing control and safety mechanisms. Typically, when the PCB controller is powered on, the central controlling system will initializes its firmware from memory and will start by setting up the system's peripherals such as timers, communication ports, etc. Once operative, the Central controlling system will be able to receive inputs from sensors, buttons or external control devices such as a remote controller. Based on its program logic, the central controlling system will process the input data and decide on the appropriate action. The central controlling system will then send signals to control components within the PCB controller to turn on the motor or adjust its speed or direction. Preferably, although not mandatory, the central controlling system may be equipped with one or more feedback look to receive feedback from sensors or external systems to continuously adjust its behaviour, thus creating a closed-loop control system.

Further provided herein is a motorized building closure and/or a solar shading device comprising a screen and a drive mechanism. The drive mechanism is configured to move the screen. Preferably, the movement of the screen is in an upward or downward direction.

Further provided herein is a method for controlling the drive mechanism, wherein the method comprises the steps of:
- checking the level of stored energy in at least one of the battery packs, and
- allowing energy generated by the one or more solar panels to be stored in at least one of the battery packs.

Preferably, the present method involves the drive mechanism to comprise a first switch positioned between the one or more solar panels and one of the battery packs, wherein the first switch is configured to allow or prevent electricity to flow from the one or more solar panels to the battery pack, and wherein the method further comprises the step of controlling the opening and/or closing of the first switch to allow or prevent the flowing of electricity from the one or more solar panels to the battery pack.

Preferably, the present method further involves the drive mechanism to comprise a second switch positioned between one of the battery packs and the motor device, and wherein the method further comprises the step of controlling the opening and/or closing of the second switch to allow or prevent the flowing of electricity from the battery pack to the motor device.

While the invention has been described in conjunction with specific embodiments thereof, it is evident that many alternatives, modifications, and variations will be apparent to those skilled in the art in light of the foregoing description. Accordingly, it is intended to embrace all such alternatives, modifications, and variations as follows in the spirit and broad scope of the appended claims. The herein disclosed aspects and embodiments of the invention are further supported by the following non-limiting examples.

### EXAMPLES

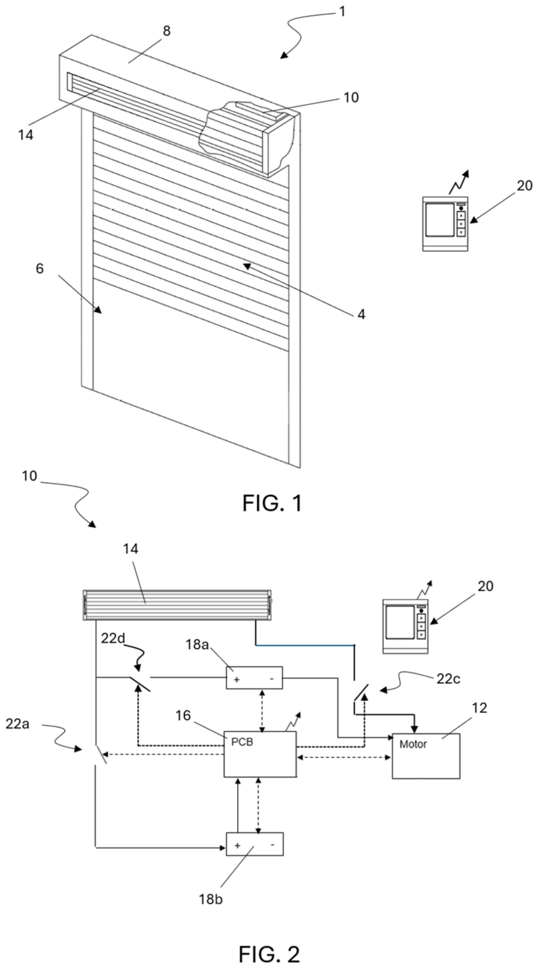

**Figure 1** shows a schematic illustration of an exemplary configuration of a building closure means, in particular a motorized solar shading device 1 such as a roll down screen or apron 4 which can be operated by a drive mechanism 10 which allows the roll down screen or apron 4 to go up or down, depending on the direction of rotation by the motor 12 of the drive mechanism 10. The motorized solar shading device 1 of the embodiment of Figure 1 is positioned above a window 6, having at least a part of the roll down screen 4 rolled up into a housing 8. The roll down screen or apron 4 is able to be raised and lowered in front of the window 6. A typical configuration of a roll down screen 4 is shown in figure 1 where the screen or apron 4 is provided in front of the window 6. The screen 4 is wound and unwound from a winding shaft (not shown) in a housing 8. The lateral sides of the screen 4 are guided by a pair of opposing guide rails (not shown in detail). Typically, the lateral sides of the screen 4 are slightly thicker than the rest of the screen, such that the sides stay within the guide rails, thereby rendering the screen relatively windproof.

The skilled person will understand that the screens provided herein are not limited to configurations as shown in Figure 1. For example, the screen may be a projection screen which is provided in front of a wall instead of a window, provided on a non-vertical surface, provided in front of a door, etc. The skilled person will further understand that the guide rails described herein are not strictly limited to be used for roll down screens, but may also be used for roller shutter devices, roller blinds, roller doors, roller curtains, sun blinds, awnings, sun screens, and projection screens. Accordingly, the term "screen" as used herein may comprise shutters or screens which are provided as a sheet of a flexible material such as a fabric, or made of interconnected lamellae as known in the art.

The housing 8 further contains components of the drive mechanism 10 such as the motor 12, a PCB controller 16, and battery packs 18a, 18b. The drive mechanism 10 which is able move the roll down screen 4, comprises a solar panel 14 installed on the front side of the housing 8. The solar panel 14 is able to convert sunlight into electricity to provide power to the motor 12 and/or the PCB controller 16. Although not shown, multiple solar panel elements can be coupled together to form a single solar panel 14. Although it is possible to directly provide power from the solar panel 14 to the motor 12, battery packs 18a, 18b are provided to temporarily store the generated electricity. Further, a remote control device 20 is provided which is able to provide instructions to the drive mechanism 10, in particular to the PCB controller 16 to control the movement of the roll down screen 4. Although the remote control device 20 of the example of figure 1 has a wireless connection with the PCB controller 16, it is likewise possible to have a hardwired connection between the control device 20 and the PCB controller 16. Also, although it may be more convenient to have a wireless control device 20 which can be located at any location in the vicinity of the drive mechanism 10, it is possible to install the control device 20 on the housing 8 of the motorized solar shading device 1 such that a user is able to raise or lower the roll down screen 4 by touching e.g. input keys on the control device 20.

**Figure 2** shows a schematic illustration of the different elements of the drive mechanism 10 to drive the roll down screen or apron 4 of figure 1. The solar panel 14 will convert sunlight into electricity which can be stored in one of the battery packs 18a, 18b or which will provide direct power to the motor 12.

A first battery pack 18a is installed between the solar panel 14 and the motor 12 and is able to store the generated electricity. The stored energy in the first battery pack 18a can then subsequently be used to power the motor 12 when a user wants to raise or lower the roll down screen or apron 4.

A second battery pack 18b is provided which is able to provide power to the PCB controller 16. Crucially, this second battery pack 18b is, in its default operational state, reserved exclusively for powering the PCB controller 16 and is electrically isolated from the power circuit of the motor 12. This ensures that the controller's operation is never compromised by the motor's power consumption. The second battery pack 18b is installed between the solar panel 14 and the PCB controller 16. Since the main function of the second battery pack 18b is to provide power to the PCB controller 16, and the PCB controller 16 typically does not use much power in order for the PCB controller 16 to stay in an operative state, the second battery pack 18b may be smaller in storage capacity than the first battery pack 18a. A first switch 22a is provided between the solar panel 14 and the second battery pack 18b to isolate the second battery pack 18b from the solar panel 14. The PCB controller 16 will be able to determine the charging state of the second battery pack 18b and monitor the level of energy available in the second battery pack 18b. When the charging level of the second battery pack 18b drops below a predetermined level, e.g. below a level needed for the PCB controller 16 to remain operable, the PCB controller 16 will close the first switch 22a such that the solar panel 14 will be able to charge the second battery pack 18b. When the PCB controller 16 detects that the charging level of the second battery pack 18b is again above the minimum threshold level, preferably again fully charged, the PCB controller 16 will open the first switch 22a again to again isolate the second battery pack 18b from the solar panel 14. Alternatively, the switch 22a is integrated in a charging chip of the second battery pack 18b. If an abnormal condition such as in increased temperature is detected in the second battery pack 18b, the charging chip 22a with switch functionality will then prevent further charging of the second battery pack 18b by switching the second battery pack 18b from a charging state to a non-charging state.

When there is no direct sunlight available, the first battery pack 18a will be able to provide electricity such that the motor 12 can still be operated. When sunlight is available, it may be more convenient to use the generated electricity and provide it directly to the motor 12. That way, it is not necessary to charge and de-charge the first battery pack 18a to then drive the motor 12. When a user wants to operate the roll down screen 4 when sufficient sunlight is available to generate sufficient electricity to provide directly to the motor 12, the PCB controller 16 will operate a switch 22c such that the power cable running between the solar panel 14 and the motor 12 is no longer interrupted.

Further, the PCB controller 16 is able to determine the status of the first battery pack 18a to identify if the first battery pack 18a is e.g. fully charged, reaching its minimum required charging level, or is even below the minimum required charging level. A switch 22d is provided in the power cable running between the solar panel 14 and the first battery pack 18a. Typically, the switch 22d is closed, thus allowing the generated electricity to flow to the first battery pack 18a where it gets stored for future use. When the PCB controller 16 determines that the first battery pack 18a is fully charged, it will be able to operate the switch 22d and open the switch 22d such that the generated electricity can no longer flow from the solar panel 14 to the first battery pack 18a. By doing so, an overcharging protection system is installed in the drive mechanism 10 which effectively protects the first battery pack 18a from producing excess heat, prevents the electrolytes in the battery pack from breaking down, or even prevent damage to the other components present in the drive mechanism 10. Alternatively, the switch 22d is integrated in a charging chip of the first battery pack 18a. If an abnormal condition such as in increased temperature is detected in the first battery pack 18a, the charging chip with switch functionality will then prevent further charging of the first battery pack 18a by switching the first battery pack 18a from a charging state to a non-charging state.

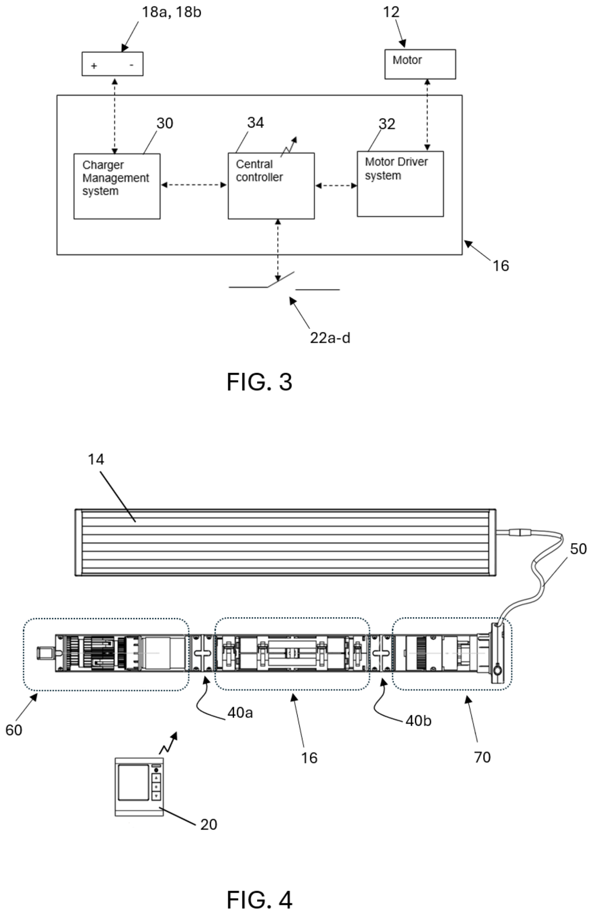

**Figure 3** shows a schematic illustration of the different elements of the PCB controller 16 according to an embodiment of the present invention. The PCB controller 16 comprises a charger management system 30 or CMS which is configured to receive charging information from the first 18a and second 18b battery pack. Further, the CMS 30 is able to send charging instructions to the first 18a and second 18b battery pack. The CMS 30 is thus able to determine if a battery pack needs to be charged, or if sufficient power is available in the battery pack to be able to power the motor 12 and/or the PCB controller 16 itself. The CMS 30 is thus an embedded system that manages and controls the process of charging the battery packs 18a, 18b in a controlled manner. Although not shown in detail, the CMS 30 as shown in figure 3 will control the charging current and voltage delivered by the solar panel 14 to the battery packs 18a, 18b. During the charging process, the CMS 30 will monitor the internal temperature of the battery pack. Therefore, a temperature sensor is provided inside the housing of the battery pack to measure the temperature. When the measured temperature is above a predetermined threshold value, the CMS 30 will detect this and will provide the necessary feedback signal to a central controlling device or central controller 34 of the PCB controller 16. The central controller 34 is able to control the switches 22a, 22d which are placed between the solar panel 14 and the battery packs 18a, 18b. Similar, the charging current and voltage of the provided electricity is constantly monitored by the CMS 30 via a current sensor and voltage sensor, and when a measured parameter is not within the predetermined boundaries, the CMS 30 will again provide a feedback signal to the central controller 34 which will then again control the respective switch 22a, 22d. By opening the switches 22a, 22d, the respective battery pack 18a, 18b is cut off from the electricity supply provided by the solar panel 14. Once isolated, e.g. the heat generated inside the battery pack will reduce again, such that the temperature will go down. Once the temperature is below a predetermined value, the CMS 30 will again detect this and will provide the measured information to the central controller 34. Again, the central controller 34 will be able to control the switch 22a, 22d such that the electricity generated by the solar panel 14 can again flow to the battery pack 18a, 18b for storage.

The PCB controller further comprises a motor driver system 32 configured to send a steering signal to the motor device 12. When a user wants to raise or lower the roll down screen 4, he will e.g. use the remote controller 20 to provide the instruction to the central controller 34. The central controller 34 will then send the steering signal to the motor 12 such that the motor 12 will facilitate the movement of the roll down screen 4. Although not mandatory, it is advisable for the central controller 34 to first check the charging level of the first battery pack 18a to determine if enough energy is available in the battery pack 18a to complete the requested task. If this is the case, the central controller 34 will provide the steering signal to the motor driver system 32 such that the motor driver system 32 will be able to send a control signal to the motor 12 to raise or lower the roll down screen 4.

Although not shown, the roll down screen 4 is preferably equipped with sensors which are able to determine if the roll down screen 4 is completely up or down. When the user requests for the roll down screen 4 to be lowered when the roll down screen 4 is in its up position, a steering signal will be send from the remote control device 20 to the central controller 34. When the central controller 34 determines that sufficient energy is available in the first battery pack 18a, a control signal will be send from the central controller 34 to the motor driver system 32. The motor driver system 32 will then amplify the control signal will be amplified to the required level to generate a steering signal capable to drive the motor 12. When the roll down screen 4 needs to be lowered, the motor 12 will be steered by the motor driver system 32 to rotate in a specific direction thus unwinding the roll down screen 4 from the housing 8. Once the roll down screen 4 is lowered completely, the available sensor on the roll down screen 4 will detect this and will send a feedback signal to the motor driver system 32 such that the motor driver system 32 can generate a steering signal to stop the movement of the motor 12. Alternatively, once the roll down screen 4 is lowered completely, the motor device (12) itself detects the end-stop condition (e.g., via a change in torque or reaching a pre-programmed rotational limit). It then sends a feedback signal back to the motor driver system 32 and central controller 34. Upon receiving this confirmation, the central controller 34 immediately generates a signal to stop the movement of the motor 12. This closed-loop control based on feedback directly from the motor prevents motor strain and ensures precise positioning.

Thus, the central controlling system or central controller 34 is configured to send a controlling or control signal to the motor driver system 32, and is simultaneously configured to send a control signal to the charger management system 30. Further, the central controller 34 is able to receive a feedback signal from the motor driver system 32 and of the charger management system 30.

**Figure 4** shows a schematic representation of the drive mechanism 10 used to drive the roll down screen 4 of figure 1. A number of elements 16, 60, 70 of the drive mechanism 10 are coupled to each other by a coupler 40a, 40b.

A first element 60 consists of the motor 12 and a gearbox for driving the roll down screen 4. Although not shown in great detail, the gearbox comprises an input shaft, an output shaft and a number of gears. The input shaft is configured to be connected the motor 12 and will transfer motion to the gears. Typically, the gears are toothed wheels which will adjust the speed and torque of the motor output, while the output shaft will transfer the motion from the gears to a movement mechanism operating the roll down screen 4.

A second element is a motor installation head 70 or motor mount which provides structural support for the motor 12. The motor installation head 70 will align the motor 12 with the gearbox and the movement mechanism of the roll down screen 4 such that a proper engagement of the different elements is achieved. Between the first element 60 and the second element, the PCB controller board 16 is foreseen. A first coupler 40a is provided between the first element 60 and the PCB controller board 16 to connect both elements to each other. A second coupler 40b is provided between the PCB controller board 16 and the second element 70 to connect both elements to each other. When using the first 40a and second 40b coupler to connect the first element 60, second element 70 and the PCB controller board 16 together, a robust but flexible setup is achieved.

For instance, the solar panel 14 used in a specific setup can be determined depending on e.g. the different power the solar panel is able to generate, which type of solar panel is more suitable taking into account the sunlight environment in which the solar panel will be used, and the available space on the housing 8 of the drive mechanism 10.

Likewise, the first element 60 comprising the motor and gearbox can be selected based on the required motor power and the speed gears.

Also the PCB controller board 16 can be selected depending on the selected solar panel, the available battery packs and the level of steering and controlling necessary for the specific setup.

Hence, by using a modular setup whereby each element can be selected depending on the specific needs for the specific setup, these elements can be releasably coupled to each other, thus allowing for an increased flexibility. Also, if a selected element displays errors, it is easy to remove the defect element and replace it by a correctly functioning element. Also, if during installation, a wrong type of element is selected, one can easily replace the element with a more appropriate element while the other elements can remain in the setup.

Further, a cable 50 is provided between the solar panel and the second element to allow the generated electricity to flow from the solar panel 14 to the drive mechanism 10 to provide for the necessary power. Further, the cable 50 can be released from the solar panel 14 and connected to a separate battery pack (not shown). For instance, when the first 18a and/or second 18b battery pack are drained, and the user still wishes to raise or lower the roll down screen 4, it is possible to disconnect the cable 50 from the solar panel 14 and to use the cable to connect to a third battery pack, being an external battery pack, to the drive mechanism 10.

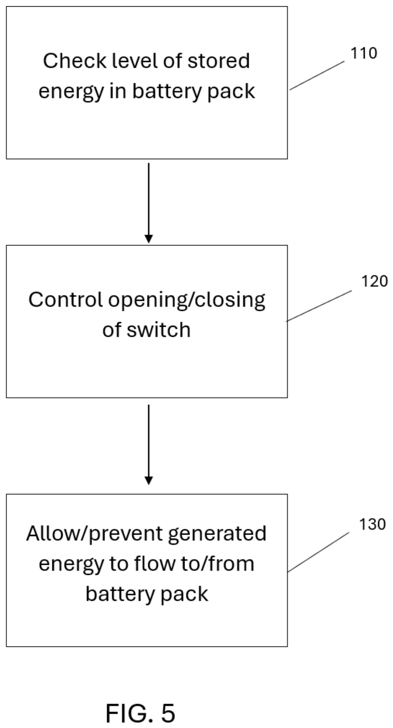

**Figure 5** shows a diagram representing the different steps of the method to control the drive mechanism 10 as shown in figure 2.

When the solar panel 14 is producing electricity, the PCB controller 16 will check at step 110 the level of stored energy in the first battery pack 18a to determine if the level of stored energy is sufficient, if the first battery pack 18a is drained below a predetermined level, or if the first battery pack 18a is not optimally used and is capable of storing an additional amount of energy.

If the PCB controller 16 determines that the first battery pack 18a is capable of storing energy, the power generated by the solar panel 14 will be allowed to flow to the first battery pack 18a and be stored in the first battery pack 18a. Although not mandatory, it is preferred that a switch 22d is provided between the solar panel 14 and the first battery pack 18a, such that the PCB controller 16 is able to check the correct functioning of the first battery pack 18a and is able to isolate the first battery pack 18a from the solar panel 14 if needed (step 120). When the switch 22d is closed, the generated power will be allowed to flow from the solar panel 14 to the first battery pack 18a.

Likewise, a switch 22a is provided which is positioned between the solar panel 14 and the second battery pack 18b. The switch 22a is configured to allow or prevent electricity to flow from the solar panel 14 to the second battery pack 18b. In step 110, the PCB controller 16 will check the level of stored energy in the second battery pack 18b. When the level of stored energy is below a predetermined value, at step 120, the PCB controller 16 will control the closing of the switch to allow in step 130, the flowing of the generated energy or electricity from the solar panel 14 to the second battery pack 18b. However, if it is determined that the level of stored energy in the second battery pack 18b is sufficiently high, at step 120, the PCB controller 16 will not close the switch such that in step 130, the flowing of generated energy to the second battery pack 18b is prevented.

An additional switch 22c may be positioned between the solar panel 14 and the motor device 12. In step 110, the PCB controller 16 will determine the level of stored energy in the battery pack 18a, 18b and, depending on the measured level, control the additional switch 22c to open or close. Depending on the status of the additional switch 22c, in step 130, the flowing of power or electricity is allowed or prevented from the battery pack 18a to the motor device 12.

## Claims

1. A drive mechanism (10) for building closure means (1) and/or solar shading means, comprising:
- one or more solar panels (14),
- a motor device (12),
- at least two battery packs (18a, 18b), and
- a PCB controller (16),
wherein the first battery pack (18a) is installed between the one or more solar panels (14) and the motor device (12), and is configured to provide power to the motor device (12);
wherein the second battery pack (18b) is installed between the one or more solar panels (14) and the PCB controller (16), and is configured to provide power exclusively to the PCB controller (16); and
wherein the PCB controller (16) is able to control and/or monitor the at least the first (18a) and second (18b) battery packs and/or the motor device (12).

2. The drive mechanism (10) according to claim 1, wherein the drive mechanism (1) further comprises a first switch (22a), the first switch (22a) being configured to be installed between the one or more solar panels (14) and the second battery pack (18b) to selectively provide power to the second battery pack (18b).

3. The drive mechanism (10) according to claim 2, wherein the PCB controller (16) is configured to control the first (22a) switch.

4. The drive mechanism (10) according to any of the preceding claims, wherein the PCB controller (16) is able to receive information from the one or more battery packs (18a, 18b).

5. The drive mechanism (10) according to any of the preceding claims, wherein the drive mechanism (10) further comprises a control device (20) to provide instructions to the PCB controller (16), the control device preferably being a remote control device (20).

6. The drive mechanism (10) according to any of the preceding claims, wherein the drive mechanism (10) comprising one or more couplers (40a, 40b), the one or more couplers (40a, 40b) are configured to interconnect a first element (60) of the drive mechanism (10), a second element (70) of the drive mechanism (10) and/or the PCB controller (16), preferably, the first element (60) comprising the motor device (12) and the second element (70) comprising a motor installation head (70).

7. The drive mechanism (10) according to any of the preceding claims, wherein the battery pack (18a, 18b) comprises a plurality of individual battery cells electrically coupled in parallel, allowing for an increase in total capacity while maintaining a consistent voltage.

8. The drive mechanism (10) according to any of the preceding claims, wherein the drive mechanism (10) further comprises a cable (50), wherein the cable (50) is configured to directly or indirectly connect the one or more solar panel (14) and the at least two battery packs (18a, 18b) to provide power from the one or more solar panels (14) to the at least two battery packs (18a, 18b) or wherein the cable (50) is configured to be connected between a third battery pack and the drive mechanism (10) to provide power to the drive mechanism (10), the third battery pack preferably being an external battery pack.

9. The drive mechanism (10) according to any of the preceding claims, wherein the PCB controller (16) comprises:
- a charger management system (30) configured to receive charging information from the at least two battery packs (18a, 18b) and/or to send charging instructions to the at least two battery packs (18a, 18b),
- a motor driver system (32) configured to send a steering signal to the motor device (12) and/or to receive a feedback signal from the motor device (12), and
- a central controlling system (34) configured to send a controlling signal to the motor driver system (32) and/or the charger management system (30), and/or to receive a feedback signal from the motor driver system (32) and/or the charger management system (30).

10. A motorized building closure and/or solar shading device (1) comprising a screen (4) and a drive mechanism (10) according to any one of the preceding claims, wherein the drive mechanism (10) is configured to move the screen (4).

11. A method for controlling the drive mechanism (10) according to any one of the preceding claims, wherein the method comprises the steps of:
- checking the level of stored energy in at least one of the battery packs (18a, 18b), and
- allowing energy generated by the one or more solar panels (14) to be stored in at least one of the battery packs (18a, 18b).

12. The method according to claim 11, wherein the drive mechanism (10) comprises a first switch (22a) positioned between the one or more solar panels (14) and one of the battery packs (18b), wherein the first switch (22a) is configured to allow or prevent electricity to flow from the one or more solar panels (14) to the battery pack (18b), and wherein the method further comprises the step of controlling the opening and/or closing of the first switch (22a) to allow or prevent the flowing of electricity from the one or more solar panels (14) to the battery pack (18b).
